# EUROPÄISCHE PATENTANMELDUNG

(11) **EP 1 757 213 A2**
(43) Veröffentlichungstag der Anmeldung: **28.02.2007**
(21) Anmeldenummer: 06017591.6
(22) Anmeldetag: 23.08.2006
(51) Int. Cl.: A47J 37/06

(54) **Teesieb**

(30) Priorität: 24.08.2005 DE 102005040102
(71) Anmelder: Völkl, Thomas, 83052 Bruckmühl (DE)
(72) Erfinder: Völkl, Thomas, 83052 Bruckmühl (DE)
(74) Vertreter: Müller, Gerald Christian

(57) **Zusammenfassung**

Bei einem Einmal-Teesieb sollen einerseits ein formstabiler Grundkörper und andererseits ein nicht unbedingt formstabiler Siebteil vorhanden sein. Zumindest der formstabile Teil (6) des Teesiebes (1) sollte durchsichtig sein, um den ziehenden Tee gut beobachten zu können, und vorzugsweise besteht das gesamte Teesieb (1) dabei aus biologisch abbaubarem Material.

## Beschreibung

### I. Anwendungsgebiet

Die Erfindung betrifft Teesiebe.

### II. Technischer Hintergrund

Teesiebe werden heute in unterschiedlichen Arten hergestellt und verwendet, und sind prinzipiell nach einmaliger oder mehrfacher Verwendbarkeit getrennt zu betrachten:

Die Siebe für einmalige Verwendbarkeit bestehen aus einer Gaze, die meist aus Zellstoff oder Papier besteht und selbst nicht formstabil ist. Formstabilität erhält sie dadurch, dass sie entweder mit einem formstabilen Rand aus Pappe, stärkerem Papier oder einem anderen Material dauerhaft oder vorübergehend befestigt ist. Bei dauerhafter Befestigung wird dieser formstabile Teil zusammen mit dem eigentlichem Filterteil anschließend weggeworfen. Bei lösbarer Befestigung wird ein solcher Filter auf einem Spannring aus z. B. Kunststoff aufgespannt.

Daneben sind insgesamt wieder verwertbare Teefilter bekannt, die ganz aus Glas, Porzellan, Edelstahl oder Kunststoff bestehen, wobei meist in einem formhaltigen Körper aus Glas oder Kunststoff eine Gaze oder ein Gewebe in Form eines engmaschigen Netzes angeordnet ist, welches aus Kunststoff, Metall oder Textilmaterial besteht und nicht oder nur begrenzt selbst formhaltig ist. Wegen der festen Verbindung mit dem formhaltigen Grundkörper werden diese Teesiebe insgesamt wieder verwendet.

Für die Gastronomie sind wieder verwendbare Lösungen de facto nicht optimal wegen der schnellen Verschmutzung des Filterteiles durch stark färbende Anteile, vor allem bei Schwarztee.

Die Einmal-Lösungen weisen den Nachteil auf, dass sie für den Gastronomen zum einem meist schwer zu handhaben sind, da hier zuerst ein manuelles Aufhalten des nicht formbeständigen Filterteiles erforderlich ist. Ein weiterer Nachteil liegt darin, dass ein solcher nur einmal verwendeter Teefilter in der Regel nicht durchsichtig ist und daher der in Wasser schwimmende Tee nicht oder höchstens von der Einfüllöffnung aus sichtbar ist.

Diese Einsehbarkeit des Tees ist jedoch für den Teeliebhaber einerseits Teil des Teegenusses und für den Gastronomen andererseits die Nachweismöglichkeit für die Verwendung eine hochwertigen Tees.

### III. Darstellung der Erfindung

### a) Technische Aufgabe

Es ist daher die Aufgabe gemäß der Erfindung, ein Teesieb insbesondere für den Einmal-Gebrauch zu schaffen, welches die Nachteile des Standes der Technik vermeidet.

### b) Lösung der Aufgabe

Diese Aufgabe wird durch die kennzeichnenden Merkmale der Ansprüche 1, und 8 gelöst. Vorteilhafte Ausführungsformen ergeben sich aus den Unteransprüchen. Indem das Teesieb teilweise oder ganz aus biologisch abbaubaren, insbesondere aus kompostierbaren, Material besteht, wird vermieden, dass durch die nur einmal verwendeten Teesiebe der dadurch erzeugte sich nicht zu setzende Müllanteil sehr groß wird. Die biologisch abbaubaren Materialien müssen dabei beileibe nicht nur papierartige, undurchsichtige Stoffe sein, sondern es sind auch biologisch abbaubare vollständig durchsichtige Folien und formstabile, tiefziehfähig Kunststoffe verfügbar.

Für die Handhabung zu bevorzugen sind Teesiebe, die einerseits aus einem Grundkörper bestehen, der zumindest im Gebrauchszustand so formstabil ist, dass er den während des Gebrauches auftretenden Belastungen gewachsen ist und insbesondere der Belastung beim Auflegen oder Einhängen auf den oberen Rand eines Teebehälters, wie eines Teeglases oder einer Teekanne, erlaubt, sowie andererseits aus einem Siebteil, der die Bestandteile des Tees im Innenraum des Teesiebes zurückhält.

Dabei können der die Formstabilität bietende Grundkörper und der die Siebfunktion bietende Siebteil teilweise, aber auch vollständig ineinander übergehen, also auch funktionsvereinigt sein.

Wenn das Teesieb wenigstens teilweise oder ganz aus lichtdurchlässigem Material besteht, insbesondere einem Material, welches stark lichtdurchlässig ist, kann der Nutzer durch dieses durchsichtige Material hindurch während des Ziehens des Tees im Teewasser - falls der Teebehälter ebenfalls durchsichtig ist, was oft der Fall ist - das Quellen des Tees sowie die Farbveränderung des Wassers beobachten und dadurch einerseits den Fortschritt der Teezubereitung kontrollieren und andererseits die Qualität der verwendeten Teepartikel sehen.

Für das einfache Einfüllen der Teepartikel zum Einen und eine gute Qualität des zubereiteten Teegetränks zum Anderen ist es notwendig, dass die Teepartikel in einem möglichst großen Flüssigkeitsvolumen schwimmen können, also der Innenraum des Teesiebes möglichst groß ist, was beispielsweise durch eine Becherform oder Beutelform, zumindest des Siebteiles, vorzugsweise des gesamten Teesiebes, sehr gut sichergestellt werden kann.

Die Beutelform wird dabei durch eine den Innenraum für die Teepartikel umlaufende Wandung gebildet, deren untere Öffnung durch einen Boden dicht verschlossen wird, und deren oberer Rand vorzugsweise radial nach außen vorsteht, zumindest mit einem Teil des Umfangsbereiches, und dort zum Auflegen auf dem Rand eines Getränkebehälters dient.

Der formstabile Grundkörper kann dabei entweder grundsätzlich formstabil sein oder nur in seinem Gebrauchszustand, also in dem Transportzustand, den er vor dem Gebrauchszustand einnimmt, entweder nicht formstabil sein oder eine andere Form besitzen als im Gebrauchszustand.

Das Siebteil dagegen ist meist teilweise, vorzugsweise in seiner gesamten Erstreckung, nicht formstabil und besteht beispielsweise aus einem Filtervlies, sei es aus Kunststoff oder organischem Material wie Zellstoff oder Papier, oder einer vielfach gelochten dünnen Folie, die ebenfalls aus Kunststoff bestehen kann.

Vorzugsweise besteht zumindest derjenige Teil des formstabilen Grundkörpers, der bei Benutzung des Teesiebes in die Flüssigkeit eintaucht, aus dem lichtdurchlässigen, insbesondere durchsichtigen, Material und wenn möglich auch das Siebteil, insbesondere auch deren nicht selbständig formbeständiger Teil des Siebteiles.

Dementsprechend ist eine konkrete Bauform des Teesiebes ein formbeständiger Becher aus durchsichtigem Kunststoff, dessen oberer Rand zum Auflegen auf dem Getränkebehälter ausgebildet ist, und der im Boden und/oder im unteren Bereich der Seitenwände eine Vielzahl von kleinen Löchern zum Hindurchtreten der Flüssigkeit aufweist, und insgesamt aus durchsichtigem, insbesondere biologisch abbaubaren Material besteht.

Siebteil und Grundkörper können entweder aus grundsätzlich verschieden Materialien, beispielsweise einem Kunststoff einerseits und einem Papiermaterial andererseits, bestehen oder aus dem gleichen Grundmaterial, welches nur in unterschiedlicher Wandstärke und/oder unterschiedlicher körperlicher Gestalt, z. B. massivem Material einerseits und gewebtem Material andererseits vorliegt. Insbesondere sollte die Anzahl der unterschiedlichen Materialien zumindest so gering wie möglich gehalten werden, also bei verschiedenen Materialien diese nicht zusätzlich durch einen aus einem dritten Material bestehenden Kleber miteinander verbunden werden, sondern das Verbinden beispielsweise durch Erhitzen und damit Kleben des einen Materials erreicht werden.

Für die Entsorgung ist es besonders vorteilhaft, wenn entweder der Grundkörper oder das Siebteil und insbesondere beide Teile, selbst wenn sie aus unterschiedlichen Materialien bestehen, jeweils aus biologisch abbaubaren Materialien bestehen und damit gemeinsam und ohne Materialtrennung in den Kompost entsorgt werden können.

Hinsichtlich des insgesamt formstabilen Grundkörpers empfiehlt sich dabei eine Gestaltung, die zur Folge hat, dass die Grundkörper und insbesondere die Teesiebe insgesamt stapelbar sind, um eine einfache Lagerung, aber auch Entnehme der einzelnen Teesiebe für den Gebrauch zu ermöglichen.

Eine besonders einfach zu handhabende und auch herzustellende Bauform besteht darin, einen becherartigen Grundkörper aus formstabilem, durchsichtigem, biologisch abbaubarem Kunststoff als Grundkörper zu benutzen, bei dem zumindest der Großteil des Bodens, ggf. auch die unteren Bereiche der Wandung des Bechers, aus einem in sich nicht formstabilen Filtervlies bestehen, welches an den Grundkörper angeklebt oder angeschweißt ist. Beispielsweise kann bei einem solchen formstabilen Becher als Grundkörper der Bodenbereich nur aus einem äußeren, ringförmig umlaufenden Randbereich des Bodens bestehen, am dem auch ein entsprechend größer als die Bodenöffnung dimensioniertes Filtervlies aufgeklebt oder angeschweißt ist.

Zusätzlich können auch im Wandbereich des Grundkörpers noch Löcher vorhanden sein, um die Durchtrittsmöglichkeiten -für die Flüssigkeit und damit den Austausch von Geschmacksstoffen, die der Tee bieten soll, zwischen Innen- und Außenraum bzgl. des Teesiebes zu verbessern.

Das becherartige Teil kann auch nur aus einer umlaufenden Wandung bestehen, am besten um den unteren Randbereich herum als ein beutelartiges, in sich nicht formstabiles Siebteil, das angeklebt oder angeschweißt ist.

Der formstabile Grundkörper weist dabei einen oberen Rand, vorzugsweise entweder einen radial nach außen vorstehenden, umlaufenden, Rand oder zumindest einzelne radial nach außen vorstehende Vorsprünge auf, die zum Auflegen auf dem oberen Rand des Getränkebehälters dienen.

Zusätzlich kann einer dieser radial vorstehenden Vorsprünge dabei als nach unten gekröpfter Haken ausgebildet sein, zum Einhängen am Rand des Getränkebehälters, so dass sich das Teesieb außerhalb des Getränkebehälters befindet. Ebenso kann einer der Vorsprünge als nach außen vorstehender Griff zum Handhaben des Teesiebs ausgebildet sein oder ein solcher Griff ist zusätzlich zu den Vorsprüngen vorhanden.

Das Filtervlies kann dabei entweder aus einem Kunststoffmaterial, insbesondere des gleichen Kunststoffes wie der Grundkörper bestehen, oder aus einem anderem Material, beispielsweise einem Papier oder Zellstoff. Sofern jedoch beide Materialien, also das des Grundkörpers, als auch das des Siebteiles, biologisch abbaubar sind, also vorzugsweise beispielsweise der Grundkörper aus biologisch abbaubarem formstabilen Kunststoff besteht und das Siebteil aus biologisch abbaubarem Filterpapier, können beide gemeinsam der Kompostierung zugeführt werden und zerfallen dort vollständig.

Anstelle eines Filtervlieses kann auch eine dünne, nicht formstabile Folie aus dem gleichen Material wie das des Grundkörpers verwendet werden, welches eine Vielzahl von Löchern aufweist, die beispielsweise durch Nadelwalzen oder durch Laserbeschuss hergestellt werden können.

Um trotz einer Lochgröße von deutlich unter 1 mm, vorzugsweise unter 0,7 mm vorzugsweise unter 0,5 mm oder gar unter 0,3 mm, beim Herausnehmen des Teesiebes aus dem Teebehälter das Abfließen des Wassers zügig von statten gehen zu lassen, kann zur Herabsetzung der Oberflächenspannung des Wassers eine solche Folie an einer definierten Stelle innerhalb des Siebteiles eine oder mehrere nach unten gerichtete Spitzen bilden, entlang denen die Teeflüssigkeit nach außen unten abtropft und dadurch die noch im Innenraum befindliche Flüssigkeit auch durch die sehr kleinen Öffnungen nachsaugt wird.

Solche Spitzen können auch dadurch gebildet werden, dass die Löcher nicht gebohrt, sondern ausgestanzt werden, jedoch nicht vollständig umlaufend und somit der ausgestanzte Butzen an einer Stelle des Umfanges noch mit dem Lochrand verbunden nach unten abragt und in dieser Stellung verbleibt und als Spitze wirkt.

Bei einem formstabilen Grundkörper liegt die Wandstärke vorzugsweise zwischen 0,2 mm und 1,8 mm, insbesondere zwischen 0,25 mm und 1,1 mm, im Wesentlichen unabhängig davon, ob es sich bei dem Material um einen Kunststoff oder z. B. Pappe handelt.

Der größte Außendurchmesser des Teesiebes, insbesondere am oberen Rand, ist dabei größer zu wählen, als die freie Öffnung des benutzten Getränkebehälters, in welche das Teesieb eingehängt werden soll, und zur Schaffung eines ausreichend breiten Innenraumes sollte die obere Öffnung des Teesiebes mindestens das 0,2 fache, besser mindestens das 0,3 fache, besser mindestens das 0,4 fache der Höhe des Teesiebes betragen.

In absoluten Maßen sollte die obere Öffnung des Teesiebes mindestens 2 cm, besser mindestens 3 cm, besser mindestens 4 cm betragen.

Das Teesieb kann auch insgesamt aus einem formstabilen Grundkörper, beispielsweise aus durchsichtigem, biologisch abbaubaren Kunststoffmaterial bestehen, in dem dann zumindest im Bodenbereich, vorzugsweise auch im Wandungsbereich, wiederum eine Vielzahl der vorerwähnten und beschriebenen Löcher angeordnet sind.

Bei dem Kunststoffmaterial handelt es sich um thermoplastisches Material, um durch Erwärmen - sei es mittels Heizstempel oder mittels Ultraschallschwingungen - dieses Kunststoffmaterial, aus dem vorzugsweise der Grundkörper besteht, auch mit anderen, nicht thermoplastischen Materialien wie etwa Filterpapier, durch Erhitzen bis zum teigigen, klebrigen Zustand verkleben zu können ohne einen zusätzlichen Kleber benutzen zu müssen.

In Relation zum Getränkebehälter ist das Teesieb dabei vorzugsweise so dimensioniert, dass das Volumen des Innenraumes des Teesiebes mindestens 50%, insbesondere mindestens 60%, besser gar 70% oder 80% des Innenvolumens des Getränkebehälters beträgt und/oder auch der Durchmesser der freien Öffnung des Teesiebes mindestens 70%, besser 80%, besser 90% des Durchmessers der Öffnung des Getränkebehälters beträgt.

Sofern der formstabile Grundkörper nicht aus durchsichtigem Material, insbesondere nicht aus Kunststoff, sondern beispielsweise aus Pappe besteht, soll dieser Grundkörper aus Pappe aufgrund des Anhaftens von Geschmacks- und Geruchsstoffen bei der Benutzung nicht bis in die Flüssigkeit herabreichen, sondern vorzugsweise nur der obere Randbereich aus diesem Material bestehen.

Vorzugsweise ist an dem oberen Teil aus formstabilem Material dann ein nicht formbeständiger Beutel als Siebteil aus beispielsweise Filterpapier angeordnet.

Vor allem der Transport und die Lagerung ist dann sehr vereinfacht, wenn beide zusammen einen flachen Transportzustand einnehmen können, von dem aus sie, insbesondere der im Gebrauchszustand formstabile Grundkörper aus Pappe in einen nicht flachen Gebrauchszustand überführt werden können, durch einen Umformvorgang, bei dem Teile des Grundkörpers relativ zueinander bewegt werden, z. B. relativ zueinander gefaltet, gedreht oder verschoben werden.

Ein für den Benutzer sehr vorteilhaftes beutelförmiges Teesieb kann dadurch geschaffen werden, dass im Gegensatz zu dem bisher aus zwei verbundenen Lagen, die Vorder- und Rückseite des Beutels bilden, und einem ergänzenden Boden, die Vorderseite des Beutels nicht aus Filtervlies, sondern einem durchsichtigen Material, beispielsweise einer durchsichtigen Kunststofffolie besteht. Die Kunststofffolie kann dabei Löcher aufweisen, ist bevorzugt jedoch ungelocht, da der Flüssigkeitsaustausch durch die als Filter ausgebildete Rückseite hindurch erfolgt, was für das Ziehen des Tees ausreichend ist, sofern wie üblich im Benutzungszustand der Innenraum des Siebbeutels einen wesentlichen Teil des Flüssigkeitsvolumens des Getränkebehälters, also der Teetasse oder des Teekännchens, beträgt.

Dadurch kann der Betrachter von der Vorderseite her jedoch zum einen das Aufquellen des Teegranulats und dessen Bewegung in der Flüssigkeit beobachten, andererseits die Verfärbung des entstehenden Getränkes und damit den richtigen Zeitpunkt zum Beenden des Prüfvorganges gut erkennen.

Bevorzugt besteht dabei auch die durchsichtige Folie aus einem biologisch abbaubaren, insbesondere kompostierbaren, Material, wie auch das Filtermaterial, welches in der Regel ein Filterpapier ist.

Ein solcher Siebbeutel kann zum jeweiligen Befestigen an einen mehrfach verwendeten Halter oder Aufhängerahmen vorgesehen sein, oder rundum verschlossen als Teebeutel ausgeführt sein oder mit einem befestigten formstabilen Grundkörper, und sei es nur einem oberen plattenförmigen Stützrand zum Auflegen auf einem Getränkebehälter, fest verbunden sein.

Das formstabile Teil muss auch nicht unbedingt im Sinne eines Grundkörpers die Grundform des nicht formbeständigen Anteiles, insbesondere des nicht formbeständigen Siebteiles, sicherstellen:
beispielsweise kann in einem nicht formbeständigen Siebteil in Beutelform, bei dem beispielsweise wieder die Vorderwand aus durchsichtigem Material besteht, ein vertikales formbeständiges Teil in Form etwa eines Stäbchens integriert, z.B. eingeklebt sein.

Dieses Stäbchen kann oben aus dem Siebteil hervorragen und als Griff dienen, um mit Hilfe des daran befestigten Siebteiles den Tee beispielsweise auch gleichzeitig umrühren zu können und dadurch auch den Flüssigkeitsaustausch zu fördern.

Zur besseren Stabilisierung können z.B. an zwei einander gegenüberliegenden Eckpunkten des horizontalen Querschnittes solche Stäbchen integriert und gegebenenfalls auch oben über eine Querplatte verbunden sein, oder der formstabile Teil ist insgesamt als Platte ausgebildet und mit dem Siebteil verbunden.

### c) Ausführungsbeispiele

Ausführungsformen gemäß der Erfindung sind im Folgenden beispielhaft näher beschrieben. Es zeigen:
- Fig. 1:: ein becherförmiges Teesieb,
- Fig. 2:: eine Abwandlung des becherförmigen Teesiebes,
- Fig. 3:: ein beutelförmiges Teesieb mit festem Grundkörper,
- Fig. 4:: ein beutelförmiges Teesieb mit spreizbarem Grundkörper,
- Fig. 5:: ein beutelförmiges Teesieb mit plattenförmigem Grundkörper, und
- Fig. 6:: ein beutelförmiges Teesieb mit einem stabförmigen, formbeständigen Teil.

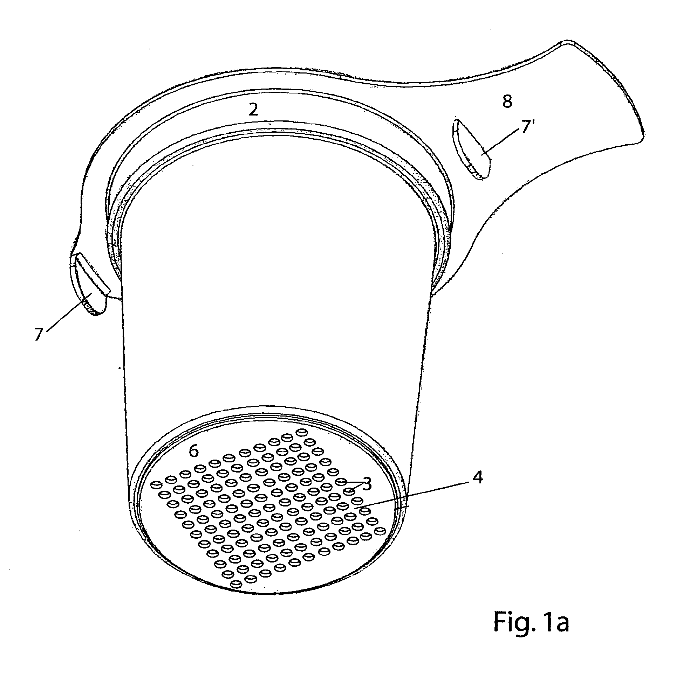

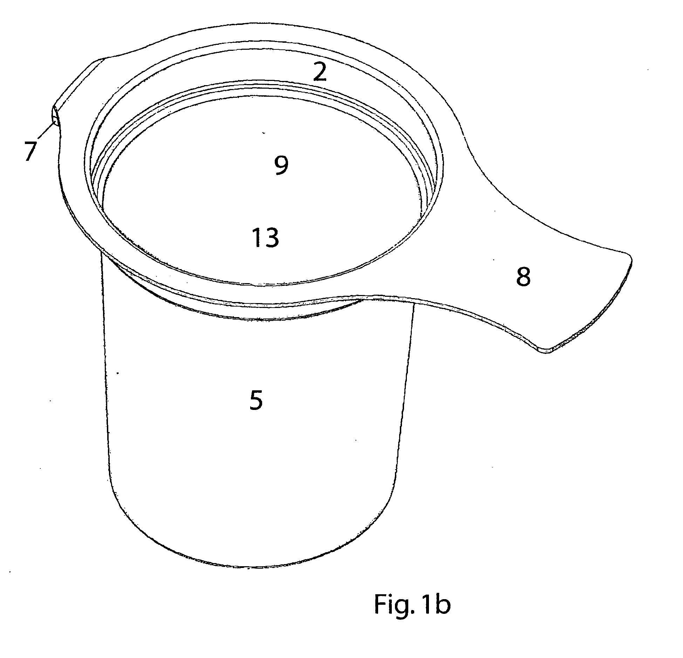

Fig. 1 zeigt ein becherartiges einstückiges Teesieb 1, bei dem der formstabile Grundkörper 2 den gesamten oberen Randbereich sowie die daran anschließenden, nach unten bis zum Boden 6 reichenden und den Innenraum 13 dicht umschließende Wandung 5 umfasst.

Das untere Ende der rundum laufenden, den Innenraum 13 nach unten leicht konisch verjüngenden, Wandung 5 ist der eigentliche Boden 6, der das Siebteil 4 darstellt und dementsprechend Löcher 3 enthält.

Der Grundkörper 2 ist im oberen Randbereich zur zusätzlichen Stabilisierung im Verlauf der Wandung 5 Z-förmig nach außen gekröpft und geht am oberen Ende der Wandung 5 in den nach außen radial abstehenden Rand 18 über.

Der Rand 18 ist auf zwei einander gegenüberliegenden Seiten radial über den normalen radialen Überstand hinaus verlängert und bildet dabei auf der einen Seite den weiter radial vorstehenden Griff 8 zum Greifen und Handhaben des gesamten Teesiebes 1, und auf der gegenüberliegenden Seite einen nach unten gekröpften Haken 7, der vor allem dem Einhängen des Teesiebes 1 vor der eigentlichen Benutzung an der Außenseite eines Teebehälters 11, beispielsweise einer Teekanne dient, in dem den Haken 7 auf den Rand des Teebehälters 11 gesteckt wird und in dessen Innraum nach unten ragt, während sich der Rest des Teesiebes 1 außen hängend am Teebehälter 11 befindet.

Der gesamte Grundkörper 2 ist dabei in sich formstabil und meist im Spritzgussverfahren oder Stanzverfahren aus einem der Wärme des fast kochenden Tees widerstehenden, vorzugsweise durchsichtigen, Material hergestellt, beispielsweise einem Kunststoff oder einem vorzugsweise z.B. aus pflanzlicher Stärke bestehenden Material.

Bevorzugt werden dabei biologisch abbaubare, also vollständig kompostierbare, Materialien für die Herstellung des Grundkörpers 2 verwendet, und ebenso für den in den Grundkörper 2 eingesetzten Boden 6.

Die konische Verjüngung des Teesiebe 1 nach unten dient einerseits der Herstellbarkeit im Spritzgussverfahren und andererseits der Stapelbarkeit der fertigen Teesiebe zu Vorratszwecken.

Auf der Unterseite des nach außen vorstehenden Randes 18, insbesondere im Verlauf zum Griff 8 hin und damit bzgl. der Öffnung 9 des Teesiebes 1 gegenüberliegend zum Haken 7 ist ein weiterer Haken 7' in Form eines von dem Rand 18 nach unten abragenden Fortsatzes vorhanden, der beim Einsetzen des Teesiebes 1 in einen Getränkebehälter 11 zusätzlich die Querpositionierung des Teesiebes 1 im Getränkebehälter 11 fixiert.

Bei der Lösung gemäß Fig. 1 ist der Boden 6 ebenfalls formstabil, und insbesondere als Spritzgussteil hergestellt, also wiederum mit einer Wandstärke ähnlich der Wandstärke des Grundkörpers 2, mit einer Vielzahl darin angeordneter, z. B. gebohrter, gestanzter oder gespritzter Löcher 3.

Sofern die Löcher mittels Stanzen hergestellt werden, stehen dabei vorzugsweise die Loch-Stanzungen 3', also die auszustanzenden Butzen, nach unten vom Boden 6 ab, in dem sie nicht vollständig ausgestanzt sind, sondern mit einem Teil des Umfanges der Ausstanzung noch verbunden sind und nach unten abstehen.

Das Problem der Löcher 3 besteht jedoch darin, dass zum einen vor allem beim Spritzen, aber auch beim Bohren, der Löcher ein Durchmesser von ca. 0,5 mm kaum unterschritten werden kann.

Löcher von 0,5 mm Durchmesser und größer lassen jedoch noch eine Vielzahl von kleinen Teepartikeln nach außen durch, die in einem durchsichtigem Teeglas aufgrund der Linsenwirkung des Teeglases optisch sogar noch größer wirken, als sie tatsächlich sind und daher für den Bereich der Gastronomie nicht akzeptabel sind.

Ein weiteres Problem besteht darin, dass bereits Löcher von 0,5 mm Durchmesser, erst recht aber kleinere Löcher in einem ebenen Boden 6 beim Herausheben des Teesiebes aus dem Getränkebehälter 11 das im Innraum 13 befindliche Wasser nur bis zu einer gewissen Restmenge herausfließen lassen.

Ist ein Flüssigkeitsstand von z. B. weniger als 1 cm in einem derartigen Teesieb erreicht, ist die Oberflächenspannung des Wassers an den Löchern 3 in der Regel so groß, dass das restliche Wasser nicht mehr selbsttätig durch diese kleinen Löcher abfließt. Auch durch zusätzliche Löcher 3 in der Wandung 5, beispielsweise in deren unteren Bereich, kann dieses Problem nicht behoben werden.

Sobald jedoch die Unterseite des Bodens 6 mit irgendeinem Gegenstand berührt wird, an dem entlang das Wasser fließen kann, wird es durch die Löcher sozusagen hindurchgesaugt.

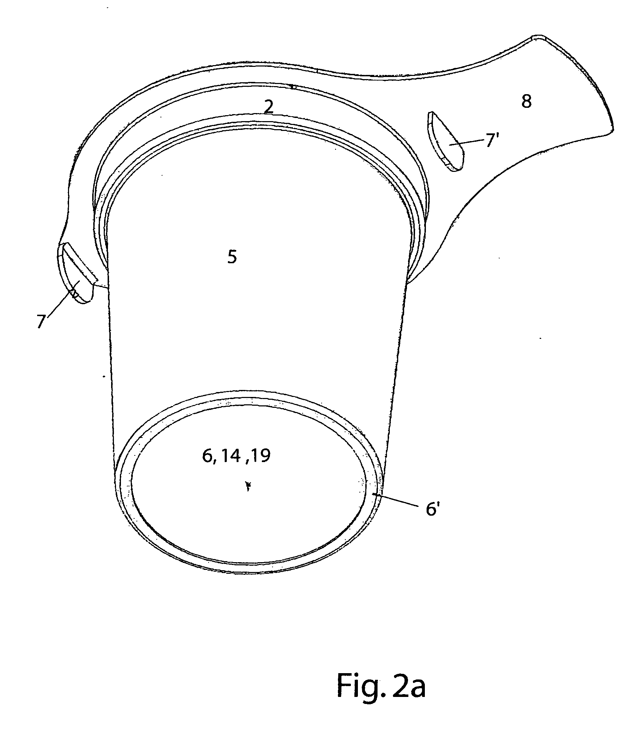

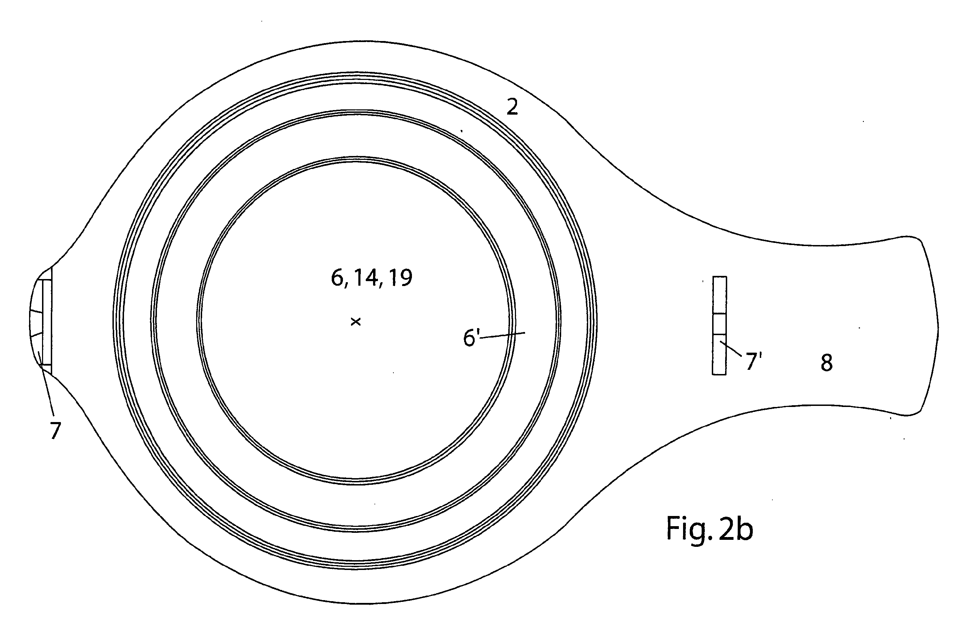

Gemäß Fig. 2 kann der Boden 6 jedoch auch aus einem selbst nicht formstabilen Material, beispielsweise Filterpapier 14 oder einer vielfach gelochten, insbesondere fein gelochten Folie 19 bestehen, die mit dem radial nach innen vorstehenden, stabilen Bodenrand 6' des Grundkörpers 2 verbunden ist durch Aufkleben oder Aufschweißen, vorzugsweise auf der Innenseite, also Oberseite, des Bodenrandes 6'.

Vorzugsweise erfolgt das Verschweißen durch Erwärmen des thermoplastischen Materials wenn es sich bei dem Material des Grundkörpers 2 und insbesondere dessen Bodenrandes 6' um ein heißsiegelfähiges Material handelt, also beispielsweise einem Thermoplast oder der Bodenrand 6' und/oder der zu befestigende Boden 6 wenigstens in seinem Randbereich aus diesem Material besteht oder mit einer entsprechenden Beschichtung versehen ist.

Vorzugsweise bestehen auch bei einem in sich nicht formstabilen Boden 6 dieser Boden 6 und der Grundkörper 2 aus dem gleichen Material, jedoch aus Materialien, die beide biologisch abbaubar, also z. B. kompostierbar, sind. Dabei kann das biologische Abbauen von unterschiedlichen benötigten Parametern abhängen, beispielsweise dem Auftreffen von UV-Licht oder Sonnenlicht auf dem Material, dem Vorhandensein von Sauerstoff, Feuchtigkeit, bestimmten Mikroben oder physikalischen oder chemischen oder organischen Parametern.

In den Fig. 2a und b sind im Boden 6 einzelne Löcher 3 nicht mehr zu erkennen, da diese so fein sind, dass sie nicht mehr zeichnerisch darstellbar sind.

Da bei den Lösungen gemäß Fig. 1 und 2 nur oder schwerpunktmäßig der Boden 6 Löcher 3 aufweist, taucht hier der Grundkörper 2 mit seiner Wandung 5 in das Wasser im Getränkebehälter 11 ein, und muss aus diesem Grunde aus einem Material bestehen, welches geschmacksneutral ist und sowohl der Wärme als auch der Feuchtigkeit des Teewassers, wenigstens eine begrenzte Zeit während des Ziehen des Tees, widersteht.

In beiden Fällen, also bei den Lösungen der Fig. 1 ebenso wie bei derjenigen der Fig. 2 - wird bevorzugt der Boden 6 nicht als ebene Fläche ausgebildet, sondern nach unten durchgebogen, vorzugsweise mit einer nach unten gerichteten Spitze gebildet, was das vollständige Abfließen des Wassers beim Hochheben aus dem Getränkebehälter 11 heraus erleichtert.

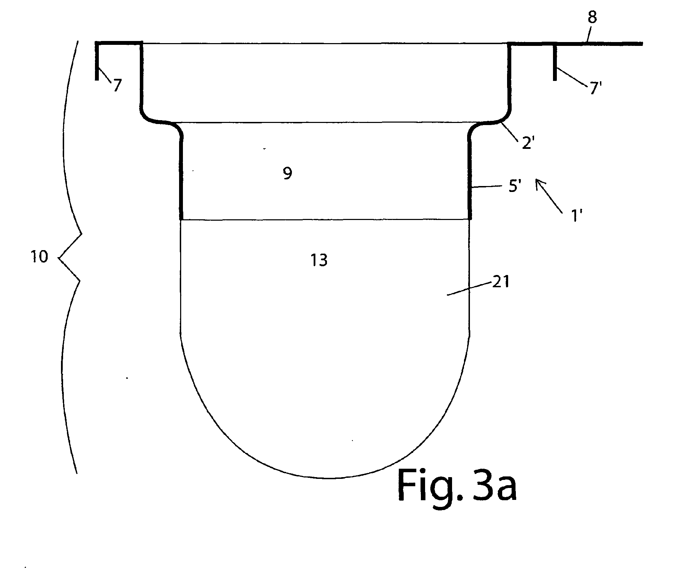

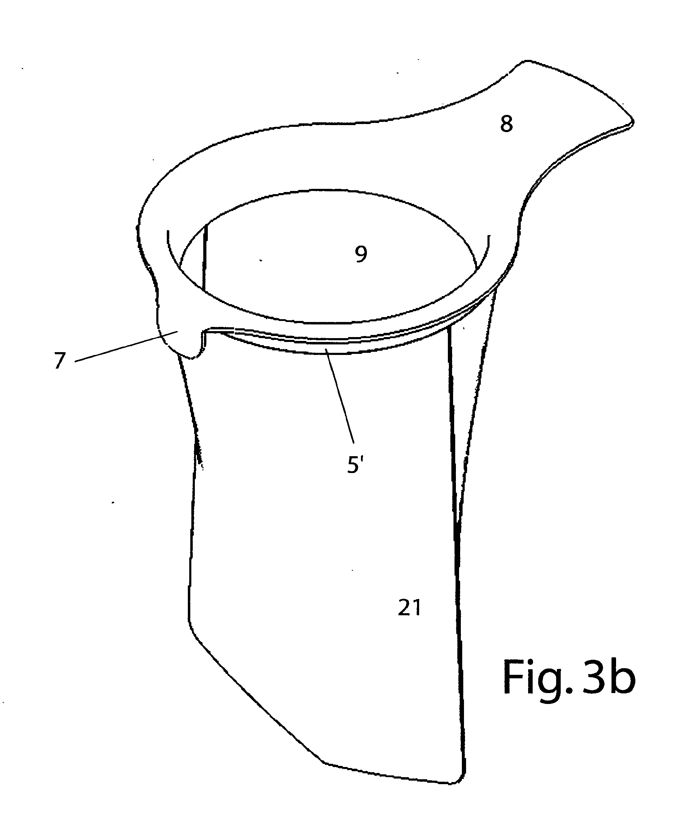

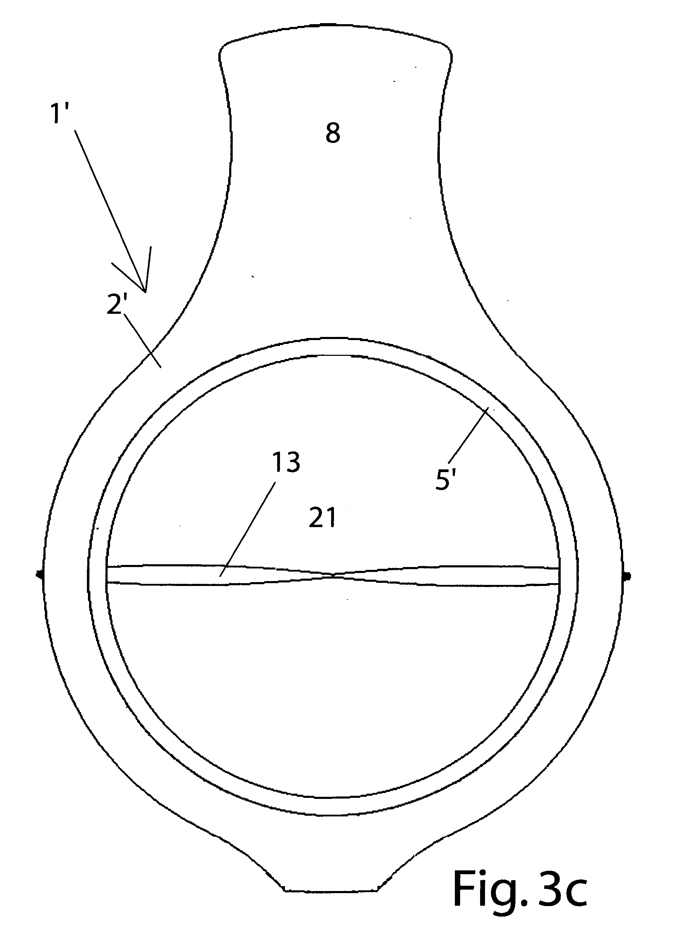

Fig. 3 zeigt eine Lösung, bei der der formstabile Grundkörper 2' im oberen Bereich analog demjenigen der Fig. 1 und 2 entspricht, dessen Wandungen 5' jedoch wesentlich weniger weiter nach unten reichen, und nur einen Wandansatz darstellen, an dem der obere Rand eines Beutels 21 aus einem nicht formbeständigen Filtermaterial, sei es Filterpapier, ein Filtervlies, ein Gewebe oder eine vielfach fein gelochte Folie 19 befestigt, insbesondere am Außenumfang verklebt oder verschweißt ist, auch dies wieder vorzugsweise mittels der schweißbaren Eigenschaften eines der verwendeten Materialien und ohne zusätzlichen Kleber oder Schweißmittel.

Die Höhe des Beutels 21 beträgt mehr als 50% der der gesamten Höhe 10 des Teesiebes 1', insbesondere mehr als 70% dessen Höhe, so dass die Fläche, innerhalb der sich Löcher für den Austausch von Flüssigkeit und den darin mitgetragenen Schwebstoffen vorhanden sind, wesentlich größer ist.

Auch hier ist der obere Rand des Beutels 21 um die Öffnung 9 herum an den nach unten weisenden Wandungen 5' umlaufend befestigt.

Fig. 3c zeigt dabei in der Aufsicht auf die Öffnung 9 von oben, dass trotz der rundumlaufenden Befestigung des Beutels 21 an den Wandungen 5' der Beutel in der Mitte mit seinen Seitenwänden sich aneinander annähern kann und erst durch Einwerfen des Tees oder Einführen z. B. eines Löffels oder das Nachlassen der Stabilität des Beutels 21 durch Eintauchen in das Teewasser sich der Beutel 21 auf seiner gesamten Höhe zu seinem vollen Innenraum 13 aufweitet.

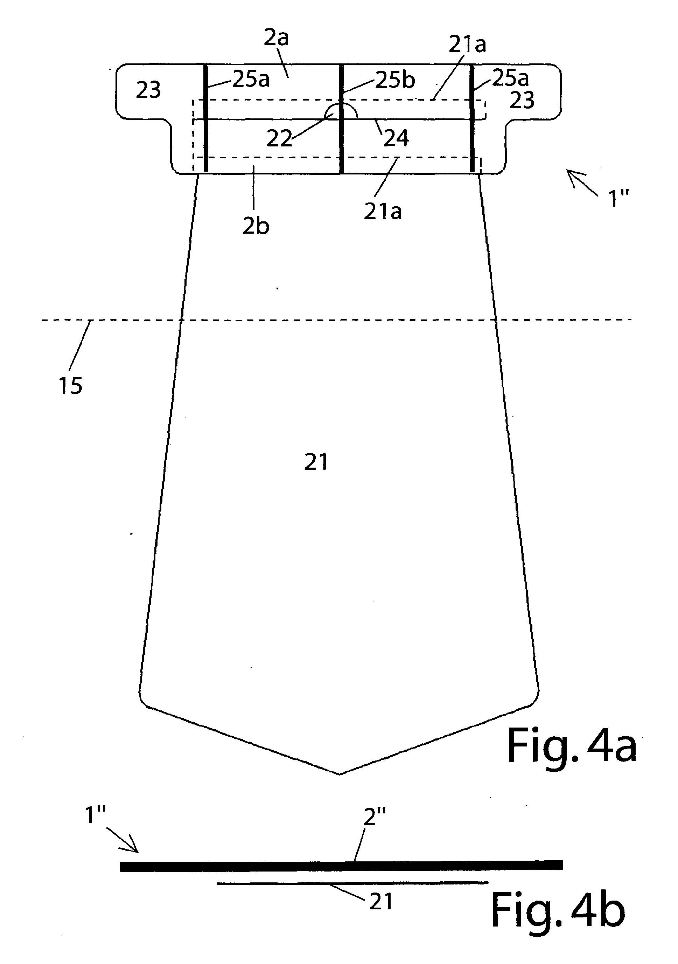

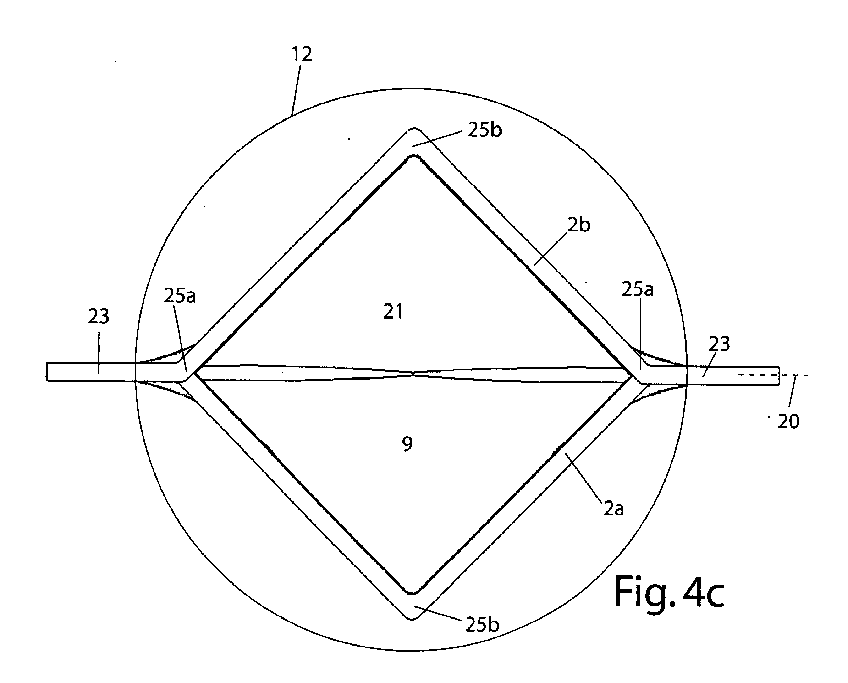

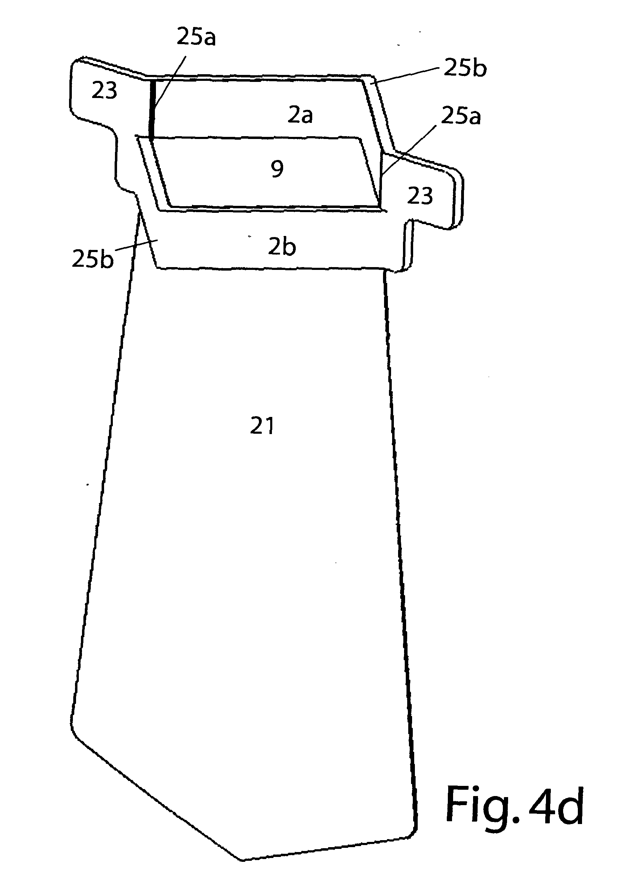

Fig. 4 zeigt eine Lösung, bei der der Grundkörper 2" ebenfalls formstabil ist, jedoch zwischen einem Transportzustand (Fig. 4a und 4b) und einem Gebrauchszustand (Fig. 4c und 4d) in seiner Gestalt veränderbar ist. Weiterhin ist die Höhe des Grundkörpers 2" so gering, dass er bei Benutzung nicht bis zur Wasseroberfläche 15 im Getränkebehälter herabreicht, und somit nur der am unteren Rand an dem Grundkörper 2 befestigte, insbesondere verklebte oder verschweißte, selbst nicht formbeständige Beutel 21 aus einem Filtermaterial in das Teewasser eintaucht.

Dementsprechend muss der formstabile Grundkörper 2" nicht unbedingt aus einem geschmacksneutralem und auch nicht aus einem durchsichtigem Material bestehen, und kann daher kostengünstig beispielsweise aus Pappe bestehen. Nachteil bei beiden Lösungen, also gemäß Fig. 3 und 4 ist jedoch immer, dass das nicht formbeständige Filtermaterial des Beutels 21 in der Regel nicht durchsichtig ist und damit vom Benutzer das Quellen des Tees von der Seite her nicht beobachtet werden kann, sondern nur von oben durch die Öffnung 9 des Teesiebes 1.

Die Fig. 4a und b zeigen das Teesieb 1" im flachgefalteten Transportzustand in der Seitenansicht (Fig. 4a) sowie in der Frontansicht von der Seite des Grundkörpers 2" her (Fig. 4b).

In der Frontansicht der Fig. 4b ist zu erkennen, dass sich dabei der Grundkörper 2" flach gefaltet in einer Hauptebene 20 erstreckt, sodass mehrere Siebe übereinander gestapelt werden können.

Wie die Seitenansicht der Fig. 4a zeigt, ist an dem unteren Rand des Grundkörpers 2" der obere offene Randbereich des Beutels 21 angeklebt, in dem bei Benutzung der Tee eingebracht wird, der nach unten breiter werden kann oder auch eine konstante Breite aufweisen kann.

Der Grundkörper 2", der beispielsweise aus Pappe bestehen kann, besteht aus einem rechteckigen mittleren Bereich, der durch einen etwa in der Mitte zwischen oberem und unterem Randbereich in diesem Rechteck verlaufenden Schlitz 24, der nicht bis zu den seitlichen Rändern durchgeht, in einen oberen Teil 2a und einen unteren Teil 2b unterteilt ist.

An dem oberen Teil 2a schließen sich nach außen überstehende Fortsätze 23 an, die zusammen mit oberem und unterem Teil 2a, b einstückig mit diesem ausgebildet sind, lediglich voneinander getrennt durch Linienprägungen 25a, in denen das Material des Grundköpers 2 zusammengedrückt ist und einen somit dünneren Querschnitt besitzt und damit eine Sollbiegestelle darstellt.

Eine weitere Linienprägungen 25b als Sollbiegestelle ist in der Mitte zwischen den seitlich äußeren Rändern des unteren Teiles 2b parallel verlaufend zu den Linienprägungen 25a vorhanden, wobei die Linienprägung 25b über die gesamte Höhe des Grundkörpers 2 verläuft, sowohl über Teil 2a als auch Teil 2b hinweg.

Zusätzlich kann der mittlere Teil des Schlitzes 24 zu einem z. B. linsenförmigen Loch 22 aufgeweitet sein.

Die beiden oberen offenen Ränder 21a, b des Beutels 21 sollten auf unterschiedlichen Höhen enden.

Der eine Randbereich 21 a des Beutels 21 ist dabei mit der Außenseite des Teiles 2b verbunden, beispielsweise verklebt, und der gegenüberliegende Randbereich 21 b des Beutels 21 mit der Außenseite des anderen, tiefer liegenden Teiles 2b des Grundkörpers 2". Der Grundkörper 2" taucht somit in die obere, im Transportzustand ebenfalls flach gefaltete, Öffnung des Beutels 21 ein.

Von dieser flachgefalteten Transportlage gemäß Fig. 4a und b kann der Grundkörper 2 in eine aufgespreizte Benutzungslage mit z. B. rechteckiger oberer Öffnung 9 aufgespreizt werden, in dem im mittleren Bereich, also bei der Linienprägung 25b, die Teile 2a und b des Grundkörpers 2" mit jeweils einer Hand ergriffen und quer zur Hauptebene 20 auseinander bewegt werden, wodurch die beiden Hälften sowohl des oberen Teiles 2a als auch des unteren Teiles 2b relativ zueinander um die Linienprägungen 25b geknickt werden, die Außenkante der Teile 2a, b jedoch um die äußeren Linienprägungen 25a herum gegenüber den Fortsätzen 23 geknickt werden.

Die vier Hälften der insgesamt zwei Teile 2a, b bilden damit ein aufgespreiztes Parallelogramm gemäß der Fig. 4c, d welches eine Vorspannung an den Linienprägungen 25a nach radial außen besitzt und aufgrund dieser Vorspannung das Teesieb von oben in die Öffnung 12 eines Teebehälters 11 eingesetzt werden kann, bis die nach außen überstehenden Fortsätze 23 auf dem oberen Rand des Behälters 11 aufsitzen und zumindest der untere Teil 2b sich im inneren der Öffnung 12 befindet und mit seinem äußeren Rändern aufgrund der Vorspannung sich radial nach außen gegen die Öffnung 12 anlegt.

Ist die Öffnung 12 genau passend groß, können auch die Knickstellen an den Linienprägungen 25b genau mit ihrer Außenseite an den Innenflächen der Öffnung 12 anliegen oder bei einer zu kleinen Öffnung 12 dabei sogar die Abschnitte der Teile 2a, b wellig nach außen durchgebogen werden, wie in Fig. 4c dargestellt.

Im Normalfall ist jedoch die Querabmessung des Grundkörpers 2" angepasst auf die kleinstmöglichste Öffnung 12, so dass bei allen größeren Öffnungen 12 wie bei der Fig. 4d ersichtlich, die Linienprägungen 25 im aufgespreizten Zustand den Rand der Öffnung 12 nicht erreichen und damit die Öffnung 9 kein Rechteck sondern nur Parallelogramm darstellt.

Das Aufspreizen kann - nach anfänglichem Auseinanderbewegen der mittleren Bereiche der Teile 2a, b - auch fortgeführt werden durch Zusammenpressen der Außenkante des Teiles 2b oder auch der Fortsätze 23 in Richtung der Hauptebene 20 gegeneinander, was ein zunehmendes Aufspreizten der Öffnung 9 bewirkt.

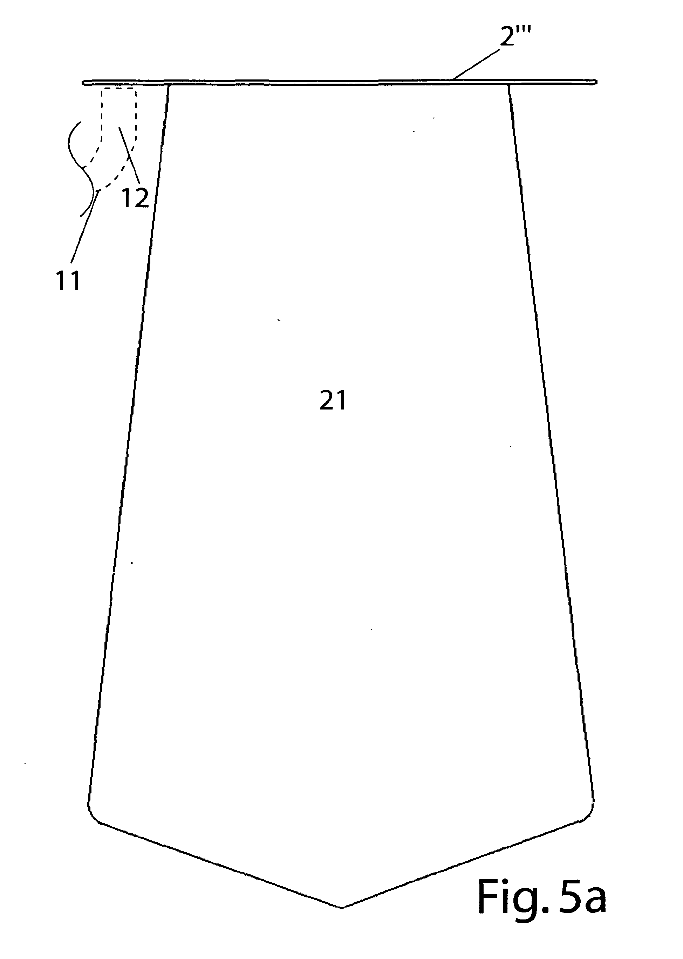

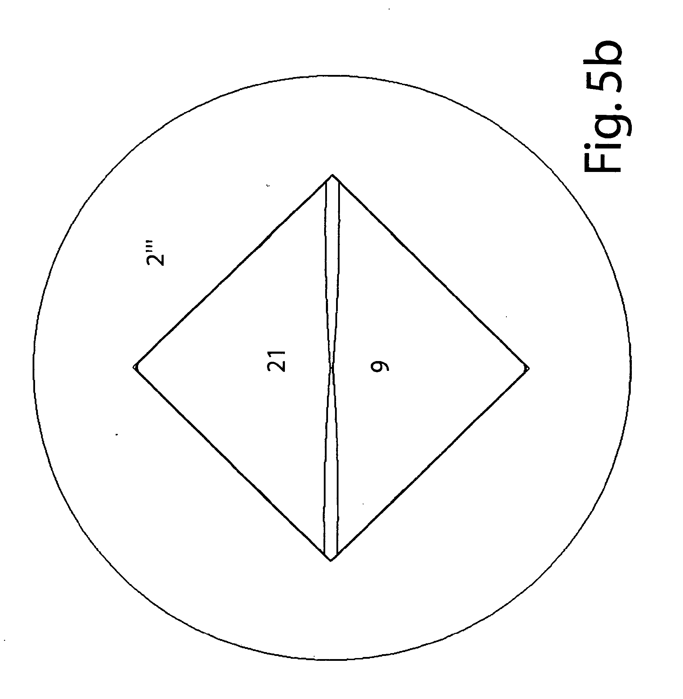

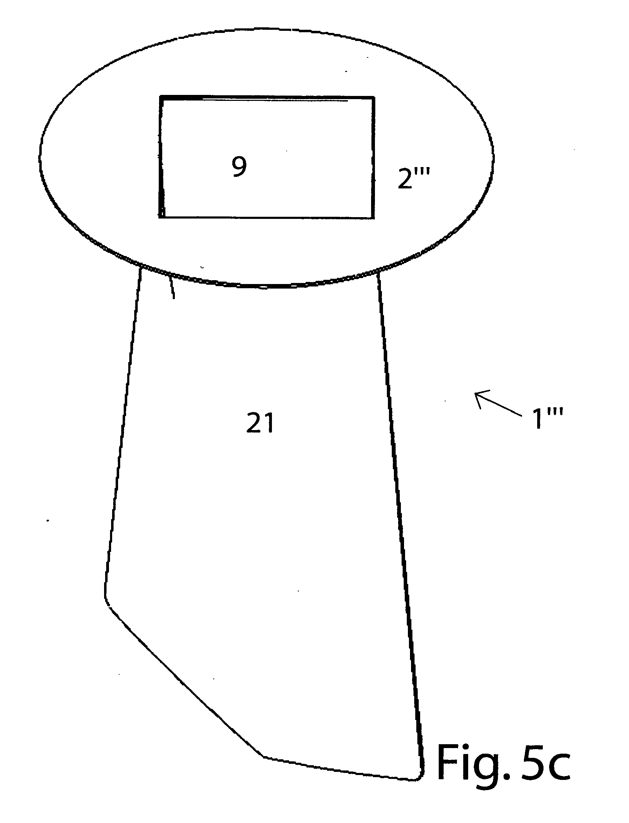

Fig. 5 zeigt eine Lösung, bei der der Grundkörper 2'" aus einer ebenen Platte besteht, die vorzugsweise sowohl im Transportzustand als auch im Gebrauchszustand die gleiche Gestalt einnimmt, aber auch für den Transportzustand um eine Diagonale herum mit zwei ihrer Hälften gegeneinander geklappt werden kann.

In der Mitte des plattenförmigen Grundkörpers 2"' befindet sich die Öffnung 9, um deren Umfang herum der Rand des selbst aus einem nicht formbeständigen Siebmaterial wie etwa Filterpapier bestehenden Beutels 21 verklebt ist. Der Beutel 21 kann aus durchsichtigem Material, beispielsweise einer vielfach gelochten Folie, bestehen, oder aus einem nicht durchsichtigem Vlies oder Gewebe, und er kann sich nach unten in seiner Breite vergrößern und auch in einer Spitze auslaufen, wie in Fig. 5a ersichtlich, oder auch eine gleich bleibende Breite auf der gesamten Höhe besitzen.

Im Transportzustand wird der Beutel 21 umgelegt und dabei flach gefaltet werden, in eine Ebene parallel zur Ebene des plattenförmigen Grundkörpers 2"', weshalb auch nach Herstellen des Gebrauchszustandes wie in Fig. 5a und 5c dargestellt, indem die Längsachse des Beutels 21 im rechten Winkel von der Hauptebene des plattenförmigen Grundkörpers 2'" abstrebt, die einander gegenüberliegenden Seiten des Beutels 21 relativ eng sich aneinander annähern - jedenfalls ab einem gewissen Abstand von dem Grundkörper 2"' - und erst durch das Hineinfallen des Tees oder das Einführen des Löffels voneinander beabstandet werden.

Da auch in diesem Fall die Höhenerstreckung des Grundkörpers 2'" so gering ist, dass beim Auflegen dieses Grundkörpers 2'" auf den Rand 12 eines Teegefäßes 11, wie in Fig. 5a linke Seite dargestellt, sich der Grundkörper 2'" überhaupt nicht ins Innere des Getränkebehälters 11 hineinerstreckt, kann der Grundkörper 2'" bei dieser Lösung auch aus einem nicht geschmacksneutralem Material wie etwa Pappe bestehen.

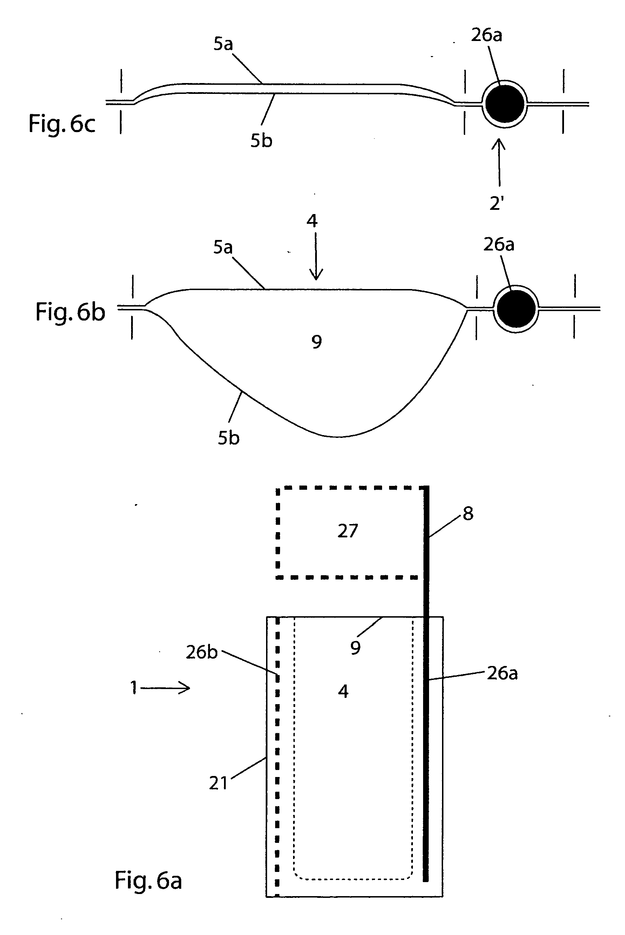

Fig. 6. zeigt eine Lösung, die aus einem formbeständigen Teil 2' sowie einem nicht formbeständigen Siebteil 4 besteht, wobei der Siebteil 4 beutelförmig mit einer oberen Öffnung 9 aus einer Vorderwand 5a und einer Rückwand 5b hergestellt ist, die an den Seitenwänden und der Unterkante gegeneinander verklebt oder anderweitig verbunden sind.

Dabei kann wiederum die eine Wand z.B. 5a aus durchsichtigem Material und beispielsweise ungelocht bestehen und die andere Wand aus einem wasserdurchlässigen Siebmaterial.

Um den Siebteil 4 in Form zu halten, ist an dem einen Randbereich, an dem Vorderwand und Rückwand 5a,b gegeneinander verbunden sind, ein formbeständiger Stab 26a mit dem Beutel 21 verbunden, vorzugsweise zwischen Vorderwand 5a und Rückwand 5b eingeklebt, der sich im wesentlichen über die gesamte Höhe des Beutels erstreckt, aber über dessen oberes Ende hinausragt, so dass der nach oben vorsehende Teil als Griff 8 zum Halten des Teesiebes 1 dienen kann. Auf diese Art und Weise kann das Teesieb 1 auch zum Umrühren des Tees dienen, besonders dann, wenn das Siebteil 4, also der Beutel 21, schlank und hoch ausgebildet ist, also mindestens dreimal so hoch wie breit ist, so dass Rührbewegungen in dem Getränkebehälter noch ausreichend Raum zur Verfügung steht.

Fig. 6c zeigt den Transportzustand, in dem Vorder- und Rückwand 5a,b dicht aneinander anliegen, so dass ersichtlich ist, dass im Transportzustand der Raumbedarf sehr gering ist im Gegensatz zu dem aufgespreizten Zustand der Fig. 6b, während oder nachdem die Granulat in Teesieb 1 eingefüllt wurde.

Die Seitenansicht gemäß Fig. 6a zeigt ferner, dass anstelle nur eines Stabes 26a in beiden einander gegenüberliegenden Seitenkanten jeweils ein Stab 26a,b auf gleiche Art und Weise integriert sein kann, und diese beiden Stäbe 26a,b auch noch in dem über den Siebteil 4 hinaus stehenden Teil durch eine Querplatte 27 verbunden werden können, was die Handhabung erleichtert und die Formstabilisierung des gesamten Teesiebes 1 verbessert.

### BEZUGSZEICHENLISTE

- 1: Teesieb
- 1a: oberer Bereich
- 1b: unterer Bereich
- 2: Grundkörper
- 2a: oberer Teil
- 2b: unterer Teil
- 3: Loch
- 3': Lochstanzung
- 4: Siebteil
- 5: Wandung
- 6: Boden
- 6': Bodenrand
- 7: Haken
- 8: Griff
- 9: Öffnung
- 10: Höhe
- 11: Getränkebehälter
- 12: Öffnung
- 13: Innenraum
- 14: Filterpapier
- 15: Wasseroberfläche
- 16: Querrichtung
- 17: Zwischenteil
- 18: Rand
- 19: gelochte Folie
- 20: Hauptebene
- 21: Beutel
- 22: Loch
- 23: Fortsatz
- 24: Schlitz
- 25: Linienprägungen
- 26: Stab
- 27: Platte

## Patentansprüche

1. Teesieb (1) mit einem Siebteil (4), in dem sich Löcher (3) befinden,
**dadurch gekennzeichnet, dass**
das Teesieb (1) wenigstens teilweise aus lichtdurchlässigem Material besteht (abbaubar).

2. Teesieb (1) mit einem Siebteil (4), in dem sich Löcher (3) befinden,
**dadurch gekennzeichnet, dass**
Grundkörper (2) und/oder Siebteil (4), insbesondere beide Teile, aus biologisch abbaubarem, insbesondere kompostierbaren, Material bestehen (durchsichtig)
und/oder insbesondere
das Teesieb wenigstens teilweise aus durchsichtigem Material besteht (Beutel)
und/oder insbesondere
wenigstens das Siebteil (4), insbesondere das ganze Teesieb (1), beutelförmig, insbesondere nicht formstabil beutelförmig, ausgebildet ist mit umlaufender Wandung (5) und einem davon umschlossenen Innenraum (13)
und/oder insbesondere
wenigstens ein Teil der Wandung (5) aus lichtdurchlässigem bzw. durchsichtigem Material besteht, insbesondere die Vorderwand (5a) eines aus Vorderwand (5a) und Rückwand (5b) bestehenden Beutels.

3. Teesieb (1) nach einem der vorhergehenden Ansprüche,
**dadurch gekennzeichnet, dass**
die aus lichtdurchlässigem, insbesondere durchsichtigem, insbesondere biologisch abbaubarem Material bestehende Vorderwand (5a) aus einer geschlossenen Folie besteht und die Rückwand (5b) aus einem wasserdurchlässigen Gewebe, Vlies oder anderem Filtermaterial
und/oder insbesondere
das beutelförmige Siebteil (4) in der Vertikalebene im Transportzustand flach ist (mit Grundkörper)
und/oder insbesondere
das Teesieb (1) wenigstens einen formstabilen Bestandteil (2'), insbesondere einen wenigstens im Gebrauchszustand formstabilen Grundkörper (2), umfasst
und/oder insbesondere
der obere Bereich (1a) des Teesiebes Bestandteil des formstabilen Grundkörpers (2) und der untere Bereich Bestandteil des Siebteiles (4) ist.

4. Teesieb (1) nach einem der vorhergehenden Ansprüche,
**dadurch gekennzeichnet, dass**
der formstabile Grundkörper (2) und das Siebteil (4) teilweise identisch sind und/oder insbesondere
wenigstens das Siebteil (4), insbesondere das ganze Teesieb (1), becherförmig ausgebildet ist mit umlaufender Wandung (5) und einen den davon umschlossenen Innenraum (13) nach unten abschließenden Boden (6) und wenigstens teilweise, vorzugsweise ganz, aus dem lichtdurchlässigem Material besteht
und/oder insbesondere
die Wandung (5) des becherförmigen Teiles wenigstens im oberen Teil, insbesondere über die gesamte Höhe, aus formstabilem Material besteht und Bestandteil des Grundkörpers (2) ist und nur der Boden (6) Löcher (3) aufweist und insbesondere aus nicht formstabilem Material, insbesondere einer Gaze oder einem Geflecht, insbesondere einem Filtermaterial, insbesondere Filterpapier (14), besteht
und/oder insbesondere
Siebteil (4) und Grundkörper (2) aus wenigstens hinsichtlich der Materialstärke unterschiedlich dicken Materialien, insbesondere aus verschiedenen Materialien, bestehen.

5. Teesieb (1) nach einem der vorhergehenden Ansprüche,
**dadurch gekennzeichnet, dass**
Siebteil (4) und Grundkörper (2) einstückig miteinander ausgebildet oder miteinander verklebt sind
und/oder insbesondere
wenigstens der Grund körper (2) des Teesiebes (1) so gestaltet ist, dass die Teesiebe (1) stapelbar sind
und/oder insbesondere
am Grundkörper (2) ein außen vorstehender, nach unten gekröpfter Haken (7) zum Einhängen am Rand einer Tasse oder einer Kanne vorhanden ist
und/oder insbesondere
am Grundkörper (2) des Teesiebes (1) ein radial nach außen vorstehender Griff (8), insbesondere auf der vom Haken (7) gegenüberliegenden Seite, angeordnet ist.

6. Teesieb (1) nach einem der vorhergehenden Ansprüche,
**dadurch gekennzeichnet, dass**
der Grundkörper (2), insbesondere das gesamte Teesieb (1), sich von oben nach unten leicht konisch verjüngend ausgebildet ist
und/oder insbesondere
der Durchmesser der oberen Öffnung (9) mindestens das 0,2 fache, besser mindestens das 0,3-fache, besser mindestens das 0,4-fache, der Höhe (10) des Teesiebes beträgt
und/oder insbesondere
der Durchmesser der oberen Öffnung (9) mindestens 2 cm, besser mindestens 3 cm, besser mindestens 4 cm beträgt
und/oder insbesondere
das Teesieb (1) aus einem formstabilen Material nach Art eines formstabilen Bechers als Grundkörper (2) einstückig hergestellt ist und eine Vielzahl von Löchern (3) mit einem Durchmesser von unter 1 mm, insbesondere unter 0,7 mm, insbesondere unter 0,5 mm, insbesondere unter 0,3 mm wenigstens im Boden (6), insbesondere auch in der Wandung (5) aufweist.

7. Teesieb (1) nach einem der vorhergehenden Ansprüche,
**dadurch gekennzeichnet, dass**
die Wandstärke des formstabilen Grundköpers (2) zwischen 0,2 mm und 1,8 mm, insbesondere zwischen 0,25 mm und 1,1 mm, beträgt
und/oder insbesondere
das insbesondere nicht formstabile Siebteil (4) aus einem Kunststoff-Vlies, aus Zellstoff oder Papier besteht, oder aus einer insbesondere durchsichtigen, aber gelochten Folie, insbesondere aus kompostierbaren Kunststoffen.
(Grundkörper Pappe)

8. Teesieb (1) insbesondere nach einem der vorhergehenden Ansprüche,
**dadurch gekennzeichnet, dass**
der formstabile Grundkörper (2) aus Pappe besteht, und von der oberen Öffnung (9) aus nur geringfügig nach unten reicht, so dass insbesondere die Pappe beim Einhängen in einen mit Wasser gefüllten Teebehälter nicht die Wasseroberfläche (15) erreicht.
(Fig. 3/4)

9. Teesieb (1) nach einem der vorhergehenden Ansprüche,
**dadurch gekennzeichnet, dass**
der Grundkörper (2) aus Pappe anfangs nur in Richtung der Höhe (10) des Teesiebes formstabil ist und insbesondere eine Quer-Formstabilität erst nach einem Verformen in seinen Gebrauchszustand erreicht
und/oder insbesondere
der Grundkörper (2) aus Pappe vor dem Verformen einen Transportzustand einnimmt, in dem er ein ebenes Gebilde mit der Dicke der maximal 3-fachen Wandstärke der Pappe des Grundkörpers besitzt.
(auch Fig. 5)

10. Teesieb (1) nach einem der vorhergehenden Ansprüche,
**dadurch gekennzeichnet, dass**
im Transportzustand ein nicht formstabiles, beutelförmiges Siebteil (4) in die Ebene des Transportzustandes des Grundkörpers (2) ebenfalls flach gefaltet ist
und/oder insbesondere
die Bewegung vom flachen Transportzustand in den in Querrichtung formstabilen Zustand eine Relativbewegung von miteinander verbundenen Teilen (2a, b) des Grundkörpers (2) umfasst, insbesondere eine Faltbewegung, Schiebebewegung oder Drehbewegung
und/oder insbesondere
die Verbindung zwischen den Teilen (2 a, b) des Grundkörpers aus Pappe ein aus dem gleichen Pappmaterial bestehendes Scharnierteil ist oder die Teile (2 a, b) nicht direkt, sondern über ein Zwischenteil (17) miteinander verbunden sind
und/oder insbesondere
das Zwischenteil (17) aus dem gleichen Material und insbesondere Bestandteil des Siebteiles (4) ist, und insbesondere ein Filter-Vlies ist.

11. Teesieb (1) nach einem der vorhergehenden Ansprüche,
**dadurch gekennzeichnet, dass**
der Grundkörper (2) im flach gefalteten Zustand sich mit seiner Hauptebene (20) in Richtung parallel der Höhe (10) des Teesiebes (1) befindet und durch Auseinanderbewegen der in der Höhe (10) übereinander angeordneten Teile (2a, b), die an den Rändern miteinander verbunden sind, eine Öffnung (9) zum Einfüllen des Tees geschaffen wird, wobei an den Teilen (2 a, b) die einander gegenüberliegenden oberen Randbereiche des beutelförmigen Siebteiles (4) angeordnet sind
und/oder insbesondere
der Grundkörper (2) ein in Querrichtung (16) zur Höhe des Teesiebes (1) liegende Platte aus Pappe ist und insbesondere um eine oder mehrere seiner Querachsen klappbar ist
und/oder insbesondere
der beutelförmige nicht formstabile Siebteil (4) mit seinem oberen Rand um die Öffnung (9) im Grundkörper (1) herum befestigt ist (Fig...).

12. Teesieb (1) insbesondere nach einem der vorhergehenden Ansprüche,
**dadurch gekennzeichnet, dass**
der formstabile Teil (2') des Teesiebes (1) ein oder mehrere stabförmig oder plattenförmig in Längsrichtung des Teesiebes, also im Gebrauch vertikal, verläuft, und über das obere Ende des Siebteiles hinaus als Griffteil verlängert ist und sich insbesondere auch über die gesamte Höhe des Siebteiles erstreckt
und/oder insbesondere
das Teesieb mindestens drei Mal, besser fünf Mal so hoch wie breit ist und zusammen mit dem formstabilen Teil (2') zum Umrühren verwendet werden kann (geschlossener Teebeutel)
und/oder insbesondere
die Einfüllöffnung des Teesiebes (1), insbesondere des beutelförmigen Siebteiles, verschließbar ist.
